# EUROPÄISCHE PATENTSCHRIFT

(11) **EP 1 969 442 B1**
(45) Veröffentlichungstag und Bekanntmachung des Hinweises auf die Patenterteilung: **14.07.2010**
(21) Anmeldenummer: 06830745.3
(22) Anmeldetag: 20.12.2006
(51) Int. Cl.: G05D 17/02, B60W 20/00

(54) **VERFAHREN ZUR VEREINFACHUNG DER MOMENTENÜBERWACHUNG, INSBESONDERE BEI HYBRIDANTRIEBEN**
METHOD FOR SIMPLIFYING THE MONITORING OF TORQUE, ESPECIALLY FOR HYBRID DRIVES
PROCÉDÉ POUR SIMPLIFIER LA SURVEILLANCE DE COUPLES, EN PARTICULIER SUR DES SYSTÈMES DE PROPULSION HYBRIDES

(30) Priorität: 29.12.2005 DE 102005062869
(43) Veröffentlichungstag der Anmeldung: 17.09.2008
(73) Patentinhaber: ROBERT BOSCH GMBH, 70442 Stuttgart (DE)
(72) Erfinder: KAEFER, Oliver, 71711 Murr (DE); NIEMANN, Holger, 71634 Ludwigsburg (DE); HAGMAN, Per, 70469 Stuttgart (DE); SEEL, Andreas, 71282 Hemmingen (DE)
(86) Internationale Anmeldenummer: PCT/EP2006/069980
(87) Internationale Veröffentlichungsnummer: WO 2007/074121

(56) Entgegenhaltungen:
- DE-A1- 10 320 017
- DE-A1- 19 739 565
- DE-A1-102004 013 581
- DE-A1-102005 010 883

## Beschreibung

### Stand der Technik

Aus DE 103 20 017 A1 ist eine Steuereinrichtung für die Antriebseinheit eines Kraftfahrzeugs bekannt, wobei die Steuereinrichtung die Antriebseinheit insbesondere hinsichtlich eines abgegebenen Antriebsmomentes steuert oder regelt und die Antriebseinheit eine Verbrennungskraftmaschine eines Kraftfahrzeugs ist. Das Kraftfahrzeug umfasst dabei üblicherweise eine durch den Fahrer des Kraftfahrzeugs betätigbare Fahrerwunsch-Übertragungseinrichtung, insbesondere ein mit dem Fuß betätigbares Fahrpedal. Diese ist dafür vorgesehen, ein einen momentanen Betätigungszustand der Fahrerwunschübertragungseinrichturig repräsentierendes Ausgangssignal abzugeben. Eine Steuereinheit empfängt das Ausgangssignal von der Fahrerwunsch-Übertragungseinrichtung und ordnet dem empfangenen Ausgangssignal wenigstens eine Soll-Ausgangsgröße, bei der es sich insbesondere um ein Soll-Antriebsmoment der Antriebseinheit handelt, zu. Die Antriebseinheit wird von der Steuereinrichtung derart angesteuert, dass sich eine von der Antriebseinheit abgegebene Ist-Ausgangsgröße der Soll-Ausgangsgröße annähert. Derartige Steuereinrichtungen sind in verschiedenen Auslegungen für übliche Kraftfahrzeugmotoren, insbesondere Ottomotoren und Dieselmotoren, bekannt, z. B. Bosch-Motorsteuerungssysteme mit elektronischem Gaspedal (EGAS).

Ferner ist bekannt, eine kontinuierliche Momentenüberwachung zur Aufdeckung von Fehlfunktionen in Steuergeräten durchzuführen. Dies dient dem Schutz von Fahrinsassen im Kraftfahrzeug sowie dem Schutz externer Verkehrsteilnehmer. Durch die kontinuierliche Momentenüberwachung soll eine ungewollte Beschleunigung des fahrzeugs vermieden werden. Der Kern der kontinuierlichen Momentenüberwachung liegt in einem Vergleich eines vom Motor bereitgestellten Ist-Momentes mit einem zulässigen Moment. Im Normalfall ist das Ist-Moment kleiner als das zulässige Moment. Falls das Ist-Moment das zulässige Moment übersteigt, liegt ein Fehler im Motorsteuergerät vor, und eine zu einem sicheren Fahrzeugzustand führende Fehlerreaktion wird eingeleitet Die Überwachung der Motorsteuergeräte erfolgt üblicherweise nach einem 3-Ebenen-Überwachungskonzept. Die Motorsteuerung selbst, insbesondere die Vorgabe des Soll-Momentes, erfolgt dabei in der als Funktionsebene bezeichneten ersten Ebene. Die 2. Ebene (Überwachungsebene) ist als die kontinuierliche Momentenüberwachung ausgeführt. In dieser Ebene wird unter anderem in Abhängigkeit von Fahrzeug- und Motorfunktionen ein zulässiges Moment ermittelt und mit einem Motor-Ist-Moment verglichen. Die 2. Ebene wird aufwändig abgesichert, so z. B. durch Doppelablage aller Variablen, zyklische RAM- und ROM-Prüfung, Programmablaufkontrollen sowie Befehlstests. Die 3. Ebene dient zur Rechnerabsicherung.

DE 197 39 565 A1 hat ein Verfahren zur Steuerung des Drehmomentes einer Antriebseinheit eines Kraftfahrzeuges zum Gegenstand, bei welchem das Drehmoment der Antriebseinheit wenigstens nach Maßgabe des Fahrerwunsches eingestellt wird, wobei das Ist-Moment der Antriebseinheit bestimmt wird und wenigstens auf der Basis des Fahrerwunsches ein maximal zulässiges Drehmoment ermittelt wird. Es erfolgt eine Drehmomentenreduzierung und/oder -begrenzung bei Überschreiten des maximal zulässigen Momentes durch das Ist-Drehmoment. Dabei wird wenigstens ein Betriebszustand festgestellt, in dem das Drehmoment der Antriebseinheit durch zusätzliche Belastung erhöht ist. Während dieses wenigstens einen Betriebszustands wird das maximal zulässige Moment erhöht. Insbesondere wird dadurch beim Betrieb mit kalter Antriebseinheit und/oder beim Betrieb belastender Verbraucher das zulässige Moment erhöht.

DE 102 004 013 581 A1 offenbart eine Steuervorrichtung für ein Hybridfahrzeug. Das Hybridfahrzeug hat einen Verbrennungsmotor und ein elektrische Maschine und ein Automatikgetriebe. Die Steuervorrichtung erfasst ein vom Fahrer angefordertes Drehmoment, wobei dieses von dem Verbrennungsmotor und der elektrischen Maschine gemeinsam erzeugt wird. Eine Begrenzungsanforderungsabgabeeinrichtung ist vorgesehen, die das vom Fahrer angeforderte Drehmoment auf das begrenzte maximale Eingangsdrehmoment des Automatikgetriebes begrenzt.

Die beschriebenen, aus dem Stand der Technik hervorgehenden Verfahren der Momentenüberwachung sind nicht ohne weiteres auf Hybridfahrzeuge zu übertragen. In Hybridfahrzeugen kommt neben einem Verbrennungsmotor mindestens eine weitere Momentenquelle (Motor) zum Einsatz. In den meisten Fällen handelt es sich hierbei um einen Elektroantrieb. In der Motorsteuerung muss nun das vom Fahrer geforderte Wunschmoment, welches beispielsweise durch Bedienen eines Fahrpedals eingestellt wird, auf die vorhandene Momentenquelle, die zumindest zwei Motoren umfasst, aufgeteilt werden. Dies geschieht in Abhängigkeit zahlreicher Umgebungsvariablen unter anderem mit dem Ziel, den verbrauchsgünstigsten Betriebspunkt für alle Momentenquellen, d. h. Antriebsmotoren, einzustellen. Der Kern der oben erwähnten kontinuierlichen Momentenüberwachung ist der Momentenvergleich in der 2. Ebene, der Überwachungsebene, in der ein zulässiges Moment der 2. Ebene (Überwachungsebene) mit einem Ist-Moment in der 2. Ebene (Überwachungsebene) verglichen wird. Überschreitet das Ist-Moment das zulässige Moment, wird eine dementsprechende Fehlerreaktion eingeleitet. Die Berechnung des zulässigen Momentes in der 2. Ebene (Überwachungsebene) bildet die Funktionalität der 1. Ebene, der Funktionsebene, ab. In der 2. Ebene (Überwachungsebene) werden nochmals die Berechnungen aus der 1. Ebene (Funktionsebene) durchgeführt, jedoch stark vereinfacht, um Fehlermöglichkeiten zu verringern. Bei Hybridfahrzeugen wird von der Fahrzeugsteuerung eine Momentenanforderung (Soll-Moment) an die einzelnen Momentenquellen, d. h. die Motoren, versendet. Das tatsächlich abgegebene Moment (Ist-Moment) kann jedoch von diesem Soll-Wert abweichen, da die Motorsteuergeräte momentenerhöhende Eigenfunktionalitäten besitzen können, so z. B. Leerlaufregler und Nebenaggregatkompensationen. Darüber hinaus bewirkt die Trägheit der Momentenquellen der Motoren eine dynamische Momentenabweichung. Diese Abweichungen müssen bei der Berechnung des zulässigen Momentes in der 2. Ebene (Überwachungsebene) nachgebildet werden, um ein fehlerhaftes Ansprechen der Momentenüberwachung zu verhindern. Dies stellt einen hohen Aufwand hinsichtlich der Entwicklung und der Applikation der 2. Ebene dar.

### Darstellung der Erfindung

Das erfindungsgemäß vorgeschlagene Verfahren zur Vereinfachung der Momentenüberwachung insbesondere bei Hybridfahrzeugen vermeidet die Nachteile der aus dem Stand der Technik bekannten Verfahren. Insbesondere ermöglicht es das erfindungsgemäß vorgeschlagene Verfahren, den Entwicklungs- und den Applikationsaufwand der Momentenüberwachung von Hybridantrieben erheblich zu reduzieren. Der bisher im Rahmen der kontinuierlichen Momentenüberwachung stattfindende Momentenvergleich zwischen dem zulässigen Moment und dem Ist-Moment im Fahrzeugsteuergerät wird durch den Momentenvergleich zwischen dem zulässigen Moment und dem Soll-Moment ersetzt.

Bei den derzeit aus dem Stand der Technik bekannten kontinuierlichen Momentenüberwachungen wird zur Ermöglichung eines Momentenvergleiches des zulässigen Momentes M_{Zul} mit dem Ist-Moment M_{Ist} in der 2. Ebene (Überwachungsebene) des Fahrzeugsteuergerätes die komplette Momenteneigenfunktionalität der eingesetzten Momentenquellen nachgebildet. Dies bedeutet eine Nachbildung der Momenteneigenfunktionalität einer Verbrennungskraftmaschine und eine Nachbildung der vollständigen Momenteneigenfunktionalität eines Elektromotors im Falle eines Hybridfahrzeuges mit einem Verbrennungsmotor und einem elektrischen Antrieb. In der 2. Ebene, der Überwachungsebene, muss dort ebenfalls das dynamische Momentenverhalten der eingesetzten Momentenquellen abgebildet werden. Dafür ist der Aufwand beispielsweise bei einem Hybridfahrzeug mit einem Verbrennungsmotor und zwei Elektroantrieben sehr hoch. Eine Änderung im Steuergerät eines der eingesetzten Antriebe eines Hybridantriebes zieht bei dieser Lösung zwangsläufig eine Änderung der 2. Ebene, der Überwachungsebene, im Fahrzeugsteuergerät nach sich. Dadurch ergibt sich ein sehr hoher Aufwand hinsichtlich der Überwachungsentwicklung bei Änderungen im Antriebsstrang eines Hybridfahrzeuges.

Durch die erfindungsgemäß vorgeschlagene Lösung, zur kontinuierlichen Momentenüberwachung einen Momentenvergleich zwischen dem zulässigen Moment und dem Soll-Moment durchzuführen, entfällt die Notwendigkeit, in der 2. Ebene, der Überwachungsebene, die Funktionalitäten der jeweils eingesetzten Momentenquellen, dies bedeutet der Motoren, abzubilden. Damit entfällt ein Großteil des andernfalls für die 2. Ebene (Überwachungsebene) zu leistenden Entwicklungs- und Applikationsaufwandes. Der erfindungsgemäß vorgeschlagene Momentenvergleich erlaubt eine Überprüfung der korrekten Funktion des Fahrzeugsteuergerätes. Der erfindungsgemäß vorgeschlagenen Lösung folgend wird die Bildung des Soll-Momentes überwacht. Zur sicheren Funktion der Überwachung ist notwendig, dass die jeweils den eingesetzten Antrieben zugeordneten Motorsteuergeräte eigensicher sind. Ein Vergleich zwischen dem Soll-Moment und dem Ist-Moment wird deshalb weiterhin in den Motorsteuergeräten stattfinden und ist aus dem Fahrzeugsteuergerät ausgelagert.

Ein weiterer durch die erfindungsgemäß vorgeschlagene Lösung erzielbarer Vorteil liegt darin, dass durch die erfindungsgemäß vorgeschlagene Lösung eine bessere Modularisierung des Überwachungskonzeptes gegeben ist. So führt z. B. eine Änderung im Antriebsstrang in Gestalt einer Verwendung eines anderen Elektromotors z. B. zu keiner Änderung hinsichtlich der Überwachung der Fahrzeugsteuerung. Dies bedeutet, dass hinsichtlich des Fahrzeugsteuergerätes, dessen 1. Ebene (Funktionsebene), dessen 2. Ebene (Überwachungsebene) und die 3. Ebene zur Absicherung der Rechner durch eine Änderung im Antriebsstrang nicht betroffen sind und demzufolge keine Anpassung an die neu eingesetzten Komponenten im Antriebsstrang eines Hybridantriebes erforderlich ist.

### Zeichnung

Anhand der Zeichnung wird die Erfindung nachstehend eingehender beschrieben.

Es zeigt:
Figur 1 einen im Rahmen der kontinuierlichen Momentenüberwachung durchzuführenden Vergleich zwischen dem zulässigen Moment M_{Zul} mit dem Ist-Moment M_{Ist} gemäß des Standes der Technik und
Figur 2 eine kontinuierliche Momentenüberwachung, bei der ein Momentenvergleich zwischen dem zulässigen Moment M_{Zul} und dem Soll-Moment M_{Soll} durchgeführt wird.

### Ausführungsbeispiele

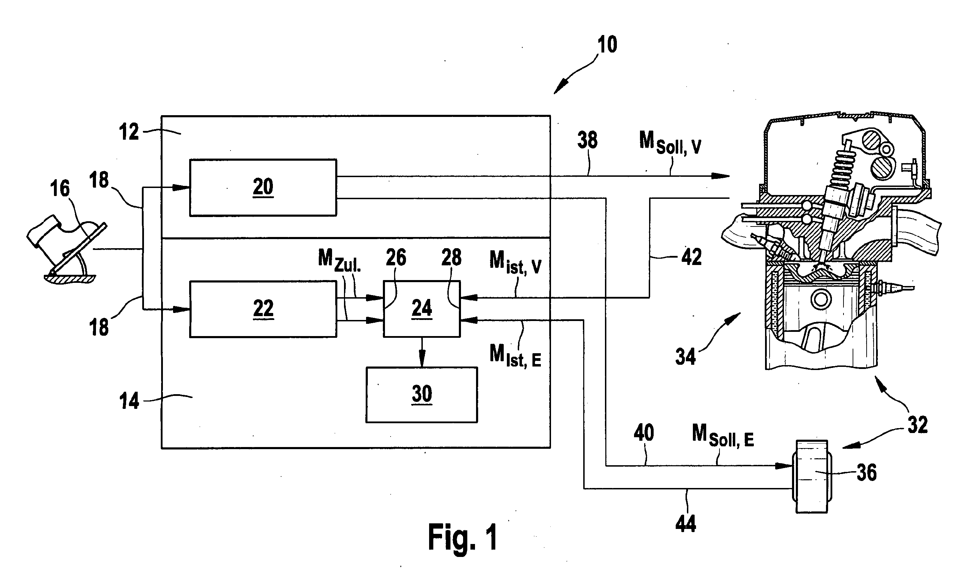

Der Darstellung gemäß Figur 1 ist ein Momentenvergleich zwischen einem zulässigen Moment M_{Zul} und einem Ist-Moment M_{Ist} bei einem Hybridantrieb innerhalb eines Fahrzeugsteuergerätes zu entnehmen.

Ein Fahrzeugsteuergerät 10 umfasst eine 1. Ebene, welche auch als Funktionsebene bezeichnet wird, sowie eine 2. Ebene, angedeutet durch Bezugszeichen 14, welche als Überwachungsebene der 1. Ebene, Bezugszeichen 12, dient. Das Fahrzeugsteuergerät 10 umfasst darüber hinaus auch eine in Figur 1 nicht dargestellte 3. Ebene, welche der Absicherung einer Rechnerarchitektur dient.

Über ein Fahrpedal 16, welches als Fahrerwunsch-Übertragungseinrichtung dient, werden an das Fahrzeugsteuergerät 10 Soll-Vorgaben 18, so z. B. hinsichtlich einer Beschleunigung eines Hybridfahrzeugs, übermittelt. Innerhalb der 1. Ebene, gekennzeichnet durch Bezugszeichen 12, der Funktionsebene, wird in einer Berechnungsstufe 20 ein Soll-Moment M_{Soll} errechnet. Parallel dazu erfolgt in einer Berechnungsstufe 22 die Errechnung eines zulässigen Momentes M_{Zul}. Die in der Berechnungsstufe 20 für das Soll-Moment M_{Soll} errechneten Werte für die Vorgabe eines Soll-Momentes M_{Soll, V} 38 und die Vorgabe eines Soll-Momentes M_{Soll, E} 40 werden an einen Hybridantrieb 32 übertragen, der im in Figur 1 dargestellten Beispiel eine Verbrennungskraftmaschine 34 sowie mindestens einen Elektro-Antrieb 36 umfasst. Die Verbrennungskraftmaschine 34 stellt eine erste Momentenquelle, der Elektro-Antrieb 36 eine zweite Momentenquelle dar.

Die in der 2. Ebene, Bezugszeichen 14, in der Berechnungsstufe 22 errechneten Werte für die zulässigen Momente M_{Zul} werden an eine Vergleichsstufe 24 übertragen. Die Vergleichsstufe 24 umfasst einen Eingang 26 für die Werte der zulässigen Momente M_{Zul} sowie Eingänge 28 für die Werte von Ist-Momenten sowohl der Verbrennungskraftmaschine 34 als auch des mindestens einen eingesetzten Elektroantriebes 36. Der Hybridantrieb 32 kann selbstverständlich auch zwei oder mehr Elektroantriebe umfassen. Das über eine Rückgabe 42 an die Vergleichsstufe 24 von der Verbrennungskraftmaschine 34 zurückgemeldete Ist-Moment M_{Ist, V} und das über eine Rückgabe 44 vom mindestens einen E-Antrieb 36 an die Vergleichsstufe 24 zurückgegebene Ist-Moment M_{Ist, E} werden in der Vergleichsstufe 24 innerhalb der 2. Ebene, Bezugszeichen 14, im Rahmen eines Momentenvergleiches miteinander verglichen. Überschreitet das Ist-Moment das zulässige Moment, wird eine Fehlerreaktion 30 eingeleitet.

Gemäß des in Figur 1 dargestellten Momentenvergleiches wird vom Fahrzeugsteuergerät 10 die Momentenanforderung der Soll-Momente M_{Soll, V} 38 bzw. M_{Soll, E} an den Hybridantrieb 32 versandt. Die tatsächlich vom Hybridantrieb 32 abgegebenen Ist-Momente M_{Ist, V} 42 und M_{Ist, E} 44 können jedoch von den Soll-Momenten M_{Soll, V} 38 und M_{Soll, E} 40 abweichen, da die Steuergeräte sowohl der Verbrennungskraftmaschine 34 als auch des mindestens einen E-Antriebs 36 des Hybridantriebs 32 momentenerhöhende Eigenfunktionalitäten besitzen, wie z. B. Leerlaufregler, Fahrhilfen sowie Kompensationen für Nebenaggregate, wie z. B. sich einschaltende Kühlerventilatoren und im Bordnetz eines Kraftfahrzeuges zuschaltbare weitere elektrische Verbraucher, wie z. B. eine Heckscheibenheizung. Diese sich aufgrund der momentenerhöhenden Eigenfunktionalität einstellenden Abweichungen müssen bei der Berechnung des zulässigen Momentes M_{Zul} in der 2. Ebene, d. h. der Überwachungsebene, Bezugszeichen 14, nachgebildet werden, um ein fehlerhaftes Ansprechen der Momentenüberwachung zu verhindern.

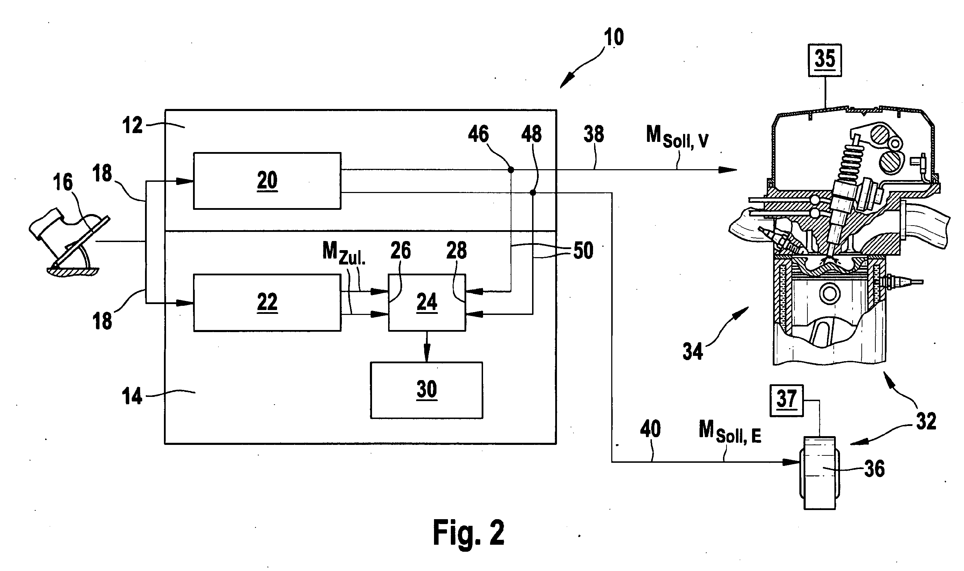

Der Darstellung gemäß Figur 2 sind Momentenvergleiche zwischen zulässigen Momenten M_{Zul} mit Soll-Momenten M_{Soll} innerhalb des Fahrzeugsteuergerätes zu entnehmen.

Nach dem erfindungsgemäß vorgeschlagenen Verfahren erfolgt an Abgriffspunkten 46 bzw. 48 ein Abgriff der in der Berechnungsstufe 20 für die jeweiligen Soll-Momente M_{Soll, V} 38 bzw. M_{Soll, E} 40 ermittelten Momenten-Werte und ein Zuführen der jeweiligen Momentenwerte für die Soll-Momente M_{Soll, V} 38 bzw. M_{Soll, E} 40 innerhalb des Fahrzeugstcuergerätes 10 über Signalleitungen 50 an die Vergleichsstufe 24. In der Vergleichsstufe 24 wird ein Momentenvergleich zwischen dem zulässigen Moment M_{Zul} in der Berechnungsstufe 22 der 2. Ebene, Bezugszeichen 14, und dem in der 1. Ebene, Funktionsebene, Bezugszeichen 12, in der Berechnungsstufe 20 ermittelten Werte für die Soll-Momente M_{Soll, V} 38 bzw. M_{Soll, E} 40 durchgeführt, ohne dass die jeweiligen Ist-Momentwerte (vergleiche Darstellung in Figur 1) M_{Ist, V} 42 bzw. M_{Ist, E} 44 berücksichtigt werden. Dadurch werden Abweichungen eliminiert, die sich aufgrund von momentenerhöhenden Eigenfunktionalitäten des Hybridantriebes 32 insbesondere der Verbrennungskraftmaschine 34 bzw. des E-Antriebes 36 einstellen können, so dass ein fehlerhaftes Ansprechen der Momentenüberwachung durch diese Effekte ausgeschlossen ist.

Durch den erfindungsgemäßen, in Figur 2 dargestellten Signalfluss im Rahmen des erfindungsgemäß vorgeschlagenen Verfahrens kann der Aufwand bei der Entwicklung und die Anpassung der Momentenüberwachung erheblich vereinfacht werden. Insbesondere kann ein ansonsten in der 2. Ebene, d. h. der Überwachungsebene, Bezugszeichen 12, zu betreibender Aufwand hinsichtlich der Nachbildung der kompletten Momenteneigenfunktionalitäten der Verbrennungskraftmaschine 34 bzw. des mindestens einen E-Antriebes 36 des Hybridantriebes 32 umgangen werden. Ebenfalls kann der erfindungsgemäß vorgeschlagenen Lösung folgend die Nachbildung des dynamischen Momentenverhaltens sowohl der Verbrennungskraftmaschine 34 und des E-Antriebes 36 in der 2. Ebene, der Überwachungsebene 14, umgangen werden. Ferner bietet die erfindungsgemäß vorgeschlagene Lösung die Möglichkeit, den Vergleich zwischen Soll-Moment und Ist-Moment sowohl hinsichtlich der Verbrennungskraftmaschine 34 als auch des mindestens einen E-Antriebes 36 in die diesen Aggregaten zugeordneten Steuergeräte 35, 37 zu verlagern und demzufolge diesen Vergleich aus dem Fahrzeugsteuergerät 10 auszulagern. Dadurch wird eine Verbesserung der Modularisierung des Überwachungskonzeptes erreicht. Eine Änderung im Antriebsstrang eines Hybridantriebes, so z. B. gegeben durch den Einsatz eines anderen E-Antriebes 36, erfordert keine Änderungen in der 1. Ebene, Bezugszeichen 12, der Funktionsebene, und in der 2. Ebene, Bezugszeichen 14, der Überwachungsebene.

Durch den erfindungsgemäß vorgeschlagenen kontinuierlichen Momentenvergleich zwischen dem Soll-Moment M_{Soll, V} 38 bzw. M_{Soll, E} 40 in der Vergleichsstufe 24 mit dem zulässigen Moment M_{Zul} wird insbesondere verhindert, dass bei Austausch von Aggregaten des Hybridantriebes 32 in der 2. Ebene, Bezugszeichen 14 (Überwachungsebene) zu betreibende Aufwand hinsichtlich einer Anpassung der Momenteneigenfunktionalität entweder der Verbrennungskraftmaschine 34 oder des mindestens einen E-Antriebes 36 zu betreiben ist. Ferner werden hinsichtlich des Fahrzeugsteuergerätes 10 zwei zusätzliche Schnittstellen, die bei den bisherigen Lösungen zur Übermittlung der Ist-Momente M_{Ist, V} 42 bzw. M_{Ist, E} 40 im Rahmen eines Momentenvergleiches gemäß der Darstellung in Figur 1 erforderlich waren, eingespart. Das Fahrzeugsteuergerät 10 führt den Momentenvergleich in der Vergleichsstufe 24 zur kontinuierlichen Momentenüberwachung zwischen der 1. Ebene, d. h. der Funktionsebene, Bezugszeichen 12, und der 2. Ebene, d. h. der Überwachungsebene, Bezugszeichen 14, aus, da die zum Vergleich in der Vergleichsstufe 24 erforderlichen Werte für die Soll-Momente M_{Soll, V} 38 bzw. M_{Soll, E} 40 bereits innerhalb des Fahrzeugsteuergerätes 10 von der 1. Ebene, der Funktionsebene, in die 2. Ebene, die Überwachungsebene, übertragen werden.

In Figur 2 ist dargestellt, dass für alle Antriebe, die Verbrennungskraftmaschine 34 und den mindestens einen Elektroantrieb 36 zulässige Momente M_{Zul} ermittelt werden. Dies bedeutet, dass für jeden innerhalb des Hybridantriebes 32 vorhandenen Antrieb ein separates, diesem Antrieb speziell zugeordnetes zulässiges Moment M_{Zul} ermittelt wird. Alternativ kann auch ein aufsummiertes zulässiges Moment M_{Zul} in der Berechnungsstufe 22 ermittelt werden, was aus der Summation der zulässigen Momente M_{Zul} der im Hybridantrieb 32 eingesetzten Einzelantriebe resultiert. Daraus ergeben sich zwei Ausprägungen des Momentenvergleichs in der Vergleichsstufe 24. Einerseits kann - wie in Figur 2 dargestellt - ein Einzel-Soll-Momentenvergleich der einzelnen zulässigen Momente M_{Zul} mit M_{Soll, V} 38 und M_{Soll, E} 40 und andererseits ein Summen-Soll-Momentenvergleich durchgeführt werden. Bei dem Summen-Soll-Momentenvergleich wird die Summe der Soll-Momente M_{Soll, V} 38 und M_{Soll, E} 40 - bei einem Hybridantrieb 32 mit zwei Momentenquellen - mit dem in der Berechnungsstufe 22 ermittelten summierten zulässigen M_{Zul} verglichen. Beide Varianten sind mit dem erfindungsgemäß vorgeschlagenen Verfahren möglich.

## Patentansprüche

1. Verfahren zur Steuerung einer Fahrzeug-Antriebscinheit (32), die mindestens zwei einzelne Antriebe (34, 36) umfasst, mit einem Fahrzeugsteuergerät (10), innerhalb dessen ein kontinuierlicher Momentenvergleich (24) zwischen einem zulässigen Moment M_{Zol} und einem weiteren Moment erfolgt, wobei das zulässige Moment M_{Zul,} M_{Zul, i} kontinuierlich mit Soll-Momenten M_{Soll, V} (38), M_{Soll, E} (40) oder M_{Soll, ges} für die mindestens zwei einzelnen Antriebe (34, 36) verglichen wird, wobei in einer Berechnungsstufe (22) zulässige Momente M_{Zul, i} für jeden der mindestens zwei einzelnen Antriebe (34, 36) ermittelt werden oder ein summiertes zulässiges Moment M_{Zul, ges} für alle Einzelantriebe (34,36) ermittelt wird, **dadurch gekennzeichnet, dass** in der Vergleichsstufe (24) die Soll-Momente M_{Soll, V} (38) und M_{Soll, E} (40) der Einzelantriebe (34, 36) der mindestens zwei einzelnen Antriebe (34, 36) mit den für die mindestens zwei Einzelantriebe (34, 36) ermittelten zulässigen Momenten M_{Zul, i} verglichen werden.

2. Verfahren gemäß Anspruch 1, **dadurch gekennzeichnet, dass** in der Vergleichsstufe (24) ein summiertes Soll-Moment M_{Soll, ges} der mindestens zwei Einzelantriebe (34, 36) mit einem summierten zulässigen Moment M_{Zul, ges} für alle Einzelantriebe (34, 36) verglichen wird.

3. Verfahren gemäß Anspruch 1, wobei die Fahrzeugantriebseinheit (32) mindestens eine Verbrennungskraftmaschine (34) und mindestens einen Elektroantrieb (36) umfasst, **dadurch gekennzeichnet, dass** die Soll-Momente M_{Soll, V} (38) und M_{Soll, E} (40) innerhalb des Fahrzeugsteuergerätes (10) berechnet werden.

4. Verfahren gemäß der Ansprüche 1 oder 2, **dadurch gekennzeichnet, dass** die berechneten Soll-Momente M_{Soll, V} (38) und M_{Soll, E} (40) innerhalb des Fahrzeugsteuergerätes (10) in einer 1. Ebene (Funktionsebene) (12) berechnet und in einer 2. Ebene (Überwachungsebene) (14) mit dem zulässigem Moment M_{Zul} verglichen werden.

5. Verfahren gemäß Anspruch 3, **dadurch gekennzeichnet, dass** ein Vergleich der im Fahrzeugsteuergerät (10) berechneten Soll-Momente M_{Soll, V} (38). M_{Soll, E} (40) mit Ist-Momenten (42, 44) der Einzelantriebe (34, 36) in den Einzelantrieben (34, 36) jeweils zugeordneten Steuergeräten (35, 37) erfolgt.

6. Verfahren gemäß Anspruch 1, **dadurch gekennzeichnet, dass** die Soll-Momente M_{Soll, V} (38) und M_{Soll, E} (40) an Abgriffspunkten (46, 48) innerhalb des 1. Ebene (Funktionsebene) (12) abgegriffen werden.

7. Verfahren gemäß Anspruch 1, **dadurch gekennzeichnet, dass** die Soll-Momente M_{Soll, V} (38) und M_{Soll, E} (40) an der in der 2. Ebene (Überwachungsebene) (14) vorgesehenen Vergleichsstufe (24) zur kontinuierlichen Momentenüberwachung übertragen werden.

8. Fahrzeugsteuergerät (10) zur Durchführung des Verfahrens gemäß einem oder mehrerer der Ansprüche 1 bis 7 für ein Fahrzeug mit einem Hybridantrieb (32), der mindestens eine Verbrennungskraftmaschine (34) und mindestens einen E-Antrieb (36) umfasst, wobei der Verbrennungskraftmaschine (34) und dem mindestens einen E-Antrieb (36) jeweils ein Steuergerät (35, 37) zugeordnet sind und das Fahrzeugsteuergerät (10) eine 1. Ebene (Funktionsebene) (12) und eine 2. Ebene (Überwachungsebene) (14) umfasst, wobei im Fahrzeugsteuergerät (10) zwischen der 1. Ebene (Funktionsebene) (12) und der 2. Ebene (Überwachungsebene) (14) eine Signalleitung (50) verläuft, über welche ermittelte Soll-Momente M_{Soll, V} (38), M_{Soll, E} (40) oder ein summiertes Soll-Moment M_{Soll, ges} in die Überwachungsebene (14) übertragen werden, wobei in einer Berechnungsstufe (22) zulässige Momente M_{Zul, i} für jeden der mindestens zwei einzelnen Antriebe (34, 36) ermittelt werden oder ein summiertes zulässiges Moment M_{Zul, ges} für alle Einzelantriebe (34, 36) ermittelt wird **dadurch gekennzeichnet, dass**
in der Vergleichsstufe (24) die Soll-Momente M_{Soll, V} (38) und M_{Soll, E} (40) der Einzelantriebe (34, 36) der mindestens zwei einzelnen Antriebe (34, 36) mit den für die mindestens zwei Einzelantriebe (34, 36) ermittelten zulässigen Momenten M_{Zul, i} verglichen werden.

9. Fahrzeugsteuergerät (10) gemäß Anspruch 8, **dadurch gekennzeichnet, dass** die Überwachungsebene (14) eine Vergleichsstufe (24) enthält, in der ein Vergleich des oder der zulässigen Momente(s) M_{Zul} mit errechneten Soll-Momenten M_{Soll, V} (38) und M_{Soll, F} (40) oder einem summierten Soll-Moment M_{Soll, ges} erfolgt.

## Claims

1. Method for controlling a vehicle drive unit (32) which comprises at least two individual drives (34, 36), with a vehicle control apparatus (10), within which continuous torque comparison (24) between a permissible torque M_{Zul} and a further torque takes place, the permissible torque M_{Zul}, M_{Zul, i} being compared continuously with desired torques M_{Soll, V} (38), M_{Soll, E} (40) or M_{Soll, ges} for the at least two individual drives (34, 36), in a calculation stage (22) permissible torques M_{Zul, i} being determined for each of the at least two individual drives (34, 36) or a summed permissible torque M_{Zul, ges} being determined for all the individual drives (34, 36), **characterized in that**, in the comparison stage (24), the desired torques M_{Soll, V} (38) and M_{Soll, E} (40) of the at least two individual drives (34, 36) are compared with the permissible torques M_{Zul, i} determined for the at least two individual drives (34, 36).

2. Method according to Claim 1, **characterized in that**, in the comparison stage (24), a summed desired torque M_{Soll, ges} of the at least two individual drives (34, 36) is compared with a summed permissible torque M_{Zul, ges} for all the individual drives (34, 36).

3. Method according to Claim 1, the vehicle drive unit (32) comprising at least one internal combustion engine (34) and at least one electric drive (36), **characterized in that** the desired torques M_{Soll, V} (38) and M_{Soll, E} (40) are calculated within the vehicle control apparatus (10).

4. Method according to either one of Claims 1 and 2, **characterized in that** the calculated desired torques M_{Soll, V} (38) and M_{Soll, E} (40) are calculated within the vehicle control apparatus (10) at a first level (functional level) (12) and are compared with the permissible torque M_{Zul} at a second level (monitoring level) (14).

5. Method according to Claim 3, **characterized in that** a comparison of the desired torques M_{Soll, V} (38) and M_{Soll, E} (40) calculated in the vehicle control apparatus (10) with actual torques (42, 44) of the individual drives (34, 36) takes place in control apparatuses (35, 37) assigned in each case to the individual drives (34, 36).

6. Method according to Claim 1, **characterized in that**, the desired torques M_{Soll, V} (38) and M_{Soll, E} (40) are picked off at pick-off points (46, 48) within the first level (functional level) (12).

7. Method according to Claim 1, **characterized in that** the desired torques M_{Soll, V} (38) and M_{Soll, E} (40) are transmitted for continuous torque monitoring to the comparison stage (24) provided at the second level (monitoring level) (14).

8. Vehicle control apparatus (10) for carrying out the method according to one or more of Claims 1 to 7 for a vehicle with a hybrid drive (32) which comprises at least one internal combustion engine (34) and at least one electric drive (36), the internal combustion engine (34) and the at least one electric drive (36) being assigned in each case a control apparatus (35, 37), and the vehicle control apparatus (10) comprising a first level (functional level) (12) and a second level (monitoring level) (14), the vehicle control apparatus (10) having running in it, between the first level (functional level) (12) and the second level (monitoring level) (14), a signal line (50), via which determined desired torques M_{Soll, V} (38) M_{Soll, E} (40) or a summed desired torque M_{Soll, ges} are transmitted to the monitoring level (14), in a calculation stage (22) permissible torques M_{Zul, i} being determined for each of the at least two individual drives (34, 36) or a summed permissible torque M_{Zul, ges} being determined for all the individual drives (34, 36), **characterized in that**, in the comparison stage (24), the desired torques M_{Soll, V} (38) and M_{Soll, E} (40) of the at least two individual drives (34, 36) are compared with the permissible torques M_{Zul, i} determined for the at least two individual drives (34, 36).

9. Vehicle control apparatus (10) according to Claim 8, **characterized in that** the monitoring level (14) contains a comparison stage (24) in which a comparison of the permissible torque or torques M_{Zul} with calculated desired torques M_{Soll, V} (38) and M_{Soll, E} (40) or with a summed desired torque M_{Soll, ges} takes place.

## Revendications

1. Procédé pour commander une unité d'entraînement de véhicule (32), qui comprend au moins deux entraînements individuels (34, 36), avec un appareil de commande de véhicule (10), à l'intérieur duquel a lieu une comparaison de couple continue (24) entre un couple admissible M_{Zul} et un couple supplémentaire, le couple admissible M_{Zul}, M_{Zul, i} étant comparé en continu avec des couples de consigne M_{Soll, V} (38), M_{Soll, E} (40) ou M_{Soll, ges} pour les au moins deux entraînements individuels (34, 36), dans une étape de calcul (22) des couples admissibles M_{Zul, i} étant déterminés pour chacun des au moins deux entraînements individuels (34, 36), ou un couple admissible additionné M_{Zul, ges} pour tous les entraînements individuels (34, 36) étant déterminé, **caractérisé en ce que** dans l'étape de comparaison (24), les couples de consigne M_{Soll, V} (38) et M_{Soll, E} (40) des entraînements individuels (34, 36) des au moins deux entraînements individuels (34, 36) sont comparés aux couples admissibles M_{Zul, i} déterminés pour les au moins deux entraînements individuels (34, 36).

2. Procédé selon la revendication 1, **caractérisé en ce que** dans l'étape de comparaison (24), un couple de consigne additionné M_{Soll, ges} des au moins deux entraînements individuels (34, 36) est comparé à un couple admissible additionné M_{Zul, ges} pour tous les entraînements individuels (34, 36).

3. Procédé selon la revendication 1, dans lequel l'unité d'entraînement de véhicule (32) comprend au moins un moteur à combustion interne (34) et au moins un entraînement électrique (36), **caractérisé en ce que** les couples de consigne M_{Soll, V} (38), et M_{Soll, E} (40) sont calculés à l'intérieur de l'appareil de commande du véhicule (10).

4. Procédé selon la revendication 1 ou 2, **caractérisé en ce que** les couples de consigne calculés M_{Soll, V} (38), et M_{Soll, E} (40) sont calculés à l'intérieur de l'appareil de commande du véhicule (10) dans un premier plan (plan fonctionnel) (12) et sont comparés dans un deuxième plan (plan de surveillance) (14) au couple admissible M_{Zul}.

5. Procédé selon la revendication 3, **caractérisé en ce qu'**une comparaison des couples de consigne M_{Soll, V} (38), et M_{Soll, E} (40) calculés à l'intérieur de l'appareil de commande du véhicule (10) avec les couples instantanés (42, 44) des entraînements individuels (34, 36) a lieu dans des appareils de commande (35, 37) associés à chaque fois aux entraînements individuels (34, 36).

6. Procédé selon la revendication 1, **caractérisé en ce que** les couples de consigne M_{Soll, V} (38), et M_{Soll, E} (40) sont saisis en des points de saisie (46, 48) à l'intérieur du premier plan (plan fonctionnel)(12).

7. Procédé selon la revendication 1, **caractérisé en ce que** les couples de consigne M_{Soll, V} (38), et M_{Soll, E} (40) sont transmis à l'étage de comparaison (24) prévu dans le deuxième plan (plan de surveillance) (14) dans le but d'une surveillance de couple continue.

8. Appareil de commande de véhicule (10) pour mettre en oeuvre le procédé selon l'une quelconque ou plusieurs des revendications 1 à 7, pour un véhicule ayant un entraînement hybride (32), qui comprend au moins un moteur à combustion interne (34) et au moins un entraînement électrique (36), le moteur à combustion interne (34) et l'au moins un entraînement électrique (36) étant chacun associés à un appareil de commande (35, 37) et l'appareil de commande de véhicule (10) comprenant un premier plan (plan fonctionnel)(12) et un deuxième plan (plan de surveillance) (14), une ligne de signal (50) s'étendant dans l'appareil de commande de véhicule (10) entre le premier plan (plan fonctionnel) (12) et le deuxième plan (plan de surveillance) (14), laquelle permet de transmettre des couples de consigne déterminés M_{Soll, V} (38), et M_{Soll, E} (40), ou un couple de consigne additionné M_{Soll, ges} dans le plan de surveillance (14), des couples admissibles M_{Zul, i} étant détectés pour chacun des au moins deux entraînements individuels (34, 36) dans une étape de calcul (22), ou un couple admissible additionné M_{Zul, ges} étant déterminé pour tous les entraînements individuels (34, 36), **caractérisé en ce que**
dans l'étape de comparaison (24), les couples de consigne M_{Soll, V} (38), et M_{Soll, E} (40) des entraînements individuels (34, 36) des au moins deux entraînements individuels (34, 36) sont comparés aux couples admissibles M_{Zul, i} déterminés pour les au moins deux entraînements individuels (34, 36).

9. Appareil de commande de véhicule (10) selon la revendication 8, **caractérisé en ce que** le plan de surveillance (14) contient un étage de comparaison (24), dans lequel a lieu une comparaison du ou des couples admissibles M_{Zul} avec les couples de consigne calculés M_{Soll, V} (38), et M_{Soll, E} (40) ou avec un couple de consigne additionné M_{soll, ges}.
